## Europäisches Patentamt
## European Patent Office
## Office européen des brevets

(19)

(11) Veröffentlichungsnummer: **0 221 392**
**B1**

(12) **EUROPÄISCHE PATENTSCHRIFT**

(45) Veröffentlichungstag der Patentschrift:
16.05.90

(51) Int. Cl.⁵: **A47J 43/044**, A47J 43/06

(21) Anmeldenummer: 86114012.7

(22) Anmeldetag: 09.10.86

(54) Zusatzgerät für eine elektrische Küchenmaschine.

(30) Priorität: 02.11.85 DE 3538967

(43) Veröffentlichungstag der Anmeldung:
13.05.87 Patentblatt 87/20

(45) Bekanntmachung des Hinweises auf die Patenterteilung:
16.05.90 Patentblatt 90/20

(84) Benannte Vertragsstaaten:
DE ES FR IT

(56) Entgegenhaltungen:
DE-B- 1 162 517
FR-A- 1 298 954
FR-A- 2 374 001
US-A- 3 556 303

(73) Patentinhaber: Braun Aktiengesellschaft,
Rüsselsheimer Strasse 22, D-6000 Frankfurt/Main(DE)

(72) Erfinder: Rebordosa, Antonio, Ignacio Iglesias, 72,
Atco. 1o, Esplugues de Llobregat Barcelona(ES)
Erfinder: Pares, Pedro, C/. Alegria 26 Sobreatico 2A,
Esplugues de Llobregat (Barcelona)(ES)
Erfinder: Safont, Vincente, Avda. Virgen de
Montserrat, 214, Barcelona(ES)

ACTORUM AG

## Beschreibung

Die Erfindung betrifft ein Zusatzgerät für eine elektrische Küchenmaschine, insbesondere für einen mit einem Arbeitswerkzeug versehenen Stabmixer, mit einem in einem Behälter von der Küchenmaschine in Drehung versetzbaren Werkzeug, das zum Zerkleinern und/oder Mischung von Nahrungsmitteln dient, mit einem das Werkzeug und den Behälter verschließbaren, mit einem Getriebe versehenen Deckel, mit einer an der Antriebsseite des Getriebes mit der Küchenmaschine in Eingriff bringbaren, zweiten Kupplungsanordnung und mit einer an der Abtriebsseite des Getriebes mit dem Werkzeug zusammenwirkenden ersten Kupplungsanordnung.

Ein derartiges Zusatzgerät für eine Küchenmaschine ist aus Fig. 1 der FR-A 1 298 954 bekannt. In den den Behälter verschließenden Deckel ist ein Getriebe integriert. Auf der Deckeloberseite stützt sich der Handmixer zum Antrieb des im Behälter ausgebildeten Werkzeugs ab. Die Antriebswelle der Küchenmaschine ist über eine nicht näher dargestellte, zweite Kupplungsanordnung mit dem antriebsseitigen Zahnrad drehfest verbunden. An der dem Behälter zugewandten Deckelunterseite ist auf das abtriebsseitige Zahnrad eine mit dem Werkzeug verbundene Welle aufgesteckt. Die Verbindung der Welle mit dem abtriebsseitigen Zahnrad bildet die erste Kupplungsanordnung, die hier ebenfalls nur andeutungsweise dargestellt ist.

Die Anordnung hat den Nachteil, daß, will man den Handmixer zusammen mit dem Zusatzgerät benutzen, erst das mit dem Handmixer verbundene Arbeitswerkzeug vom Handmixer entfernt werden muß, bevor anschließend der Handmixer auf den Deckel aufgesetzt werden und dessen Antriebswelle in das Antriebszahnrad eingreifen kann. Auch das Aufsetzen des Handmixers auf den Deckel erfordert eine genaue Ausrichtung des Handmixers zum Deckel.

Da das Werkzeug im Behälter verhältnismäßig weit vom Deckel entfernt und nur über eine dünne Welle einseitig am Antriebszahnrad des Getriebes gelagert ist, können hierdurch nicht unbeachtliche Biegemomente entstehen, die schon bereits nach kurzem Betrieb des Zusatzgerätes zur Beschädigung der ersten Kupplungsanordnung bzw. des Getriebes führen. Dieses Zusatzgerät hat weiterhin den Nachteil, daß der Deckel mitsamt der Küchenmaschine und dem Werkzeug vom Behälter abgenommen werden kann und es dabei noch möglich ist, den Antrieb der Küchenmaschine in Gang zu setzen. Hierdurch sind Verletzungen durch das oft sehr scharfe, rotierende Werkzeug zwangsweise vorprogrammiert.

Ein weiteres Zusatzgerät für einen Stabmixer ist aus dem deutschen Gebrauchsmuster 1 822 614 bekannt. Der Stabmixer weist eine von einem Schutzrohr umschlossene Antriebswelle auf, die an ihrem freien Ende über einen Bajonettverschluß mit verschiedenen Werkzeugen verbindbar ist. Entsprechend der Behandlungsart der Nahrungsmittel wird ein hierfür geeignetes Arbeitswerkzeug auf das Wellenende des Stabmixers aufgesetzt. Das Arbeitswerkzeug ist zur Vermeidung von Verletzungen radial von außen von einer korbähnlichen Haube umgeben, die an dem Mantelrohr des Stabmixers ortsfest gehalten wird.

Zum Zerkleinern von Fleisch, Petersilie, Knoblauch etc. dient als Werkzeug eine in einem Zusatzgerät rotierende Messeranordnung, die gegenüber den anderen aufgeführten Arbeitswerkzeugen zum Verbinden der Antriebswelle einen länglichen Wellenstumpf aufweist und dadurch unterhalb der Haube im Zusatzgerät verläuft. Der Deckel des Zusatzgerätes weist eine zentrale Öffnung auf, an deren Rand die Haube über einen Bajonettverschluß mit dem Deckel formschlüssig befestigbar ist. Hierdurch soll erreicht werden, daß die als Werkzeug ausgebildete Messeranordnung stets konzentrisch zum Behälter verläuft.

Beim Montieren der Messeranordnung auf der Antriebswelle ist diese völlig ungeschützt, so daß bei unbeabsichtigtem Einschalten des Handmixers Verletzungen nicht ausgeschlossen sind. Ein weiterer Nachteil besteht darin, daß, wenn sich während des Betriebs die Haube vom Deckel löst, die Messeranordnung nicht nur den Deckel und den Behälter zerstören, sondern auch dem Benutzer Schnittwunden zufügen kann.

Als weiterer Nachteil ist es anzusehen, daß aufgrund der bei derartigen Stabmixern oft sehr hohen Drehzahlen das zu zermahlende Gut auch dann, wenn man sofort nach dem Einschalten den Stabmixer wieder ausschaltet, bereits einen breiigen Zustand erreicht hat, der bei vielen Nahrungsmitteln nicht gewünscht wird. Das mit dem Stabmixer verbundene Zusatzgerät läßt demnach kaum eine gewünschte Mahlgutgröße zu.

Aufgabe der Erfindung ist es daher, ein Zusatzgerät für eine Küchenmaschine, insbesondere für einen Stabmixer, zu schaffen, durch das ein automatisches Einkuppeln der Antriebseinrichtung der Küchenmaschine ohne Auswechseln von Teilen ermöglicht wird, das optimale Schneidergebnisse liefert, das einfach und schnell geöffnet bzw. montiert werden kann, und durch das Verletzungsgefahren vollständig beseitigt werden. Das Zusatzgerät soll dabei einfach und billig herstellbar sein.

Diese Aufgabe wird erfindungsgemäß dadurch gelöst, daß das Arbeitswerkzeug der Küchenmaschine mit der antriebsseitigen Kupplungshälfte des Zusatzgerätes die zweite Kupplungsanordnung bildet, daß das Werkzeug im Boden des Behälters drehbar gelagert ist und daß beide Kupplungshälften der ersten Kupplungsanordnung erst dann drehfest miteinander verbunden sind, wenn der Deckel den Behälter verschlossen hat. Durch die beiden Kupplungsanordnungen und die Lagerungen des Werkzeugs im Behälter wird ermöglicht, daß das in dem Zusatzgerät vorhandene, zweite Werkzeug niemals mehr bei abgenommenem Behälter angetrieben werden kann, so daß Verletzungen hierdurch ausgeschlossen sind und daß ohne zusätzliche Aufwendung der Stabmixer mit seinem Arbeitswerkzeug direkt auf die zweite Kupplungshälfte des Zusatzgerätes aufgesetzt und sofort in Betrieb genommen werden kann. Das Werkzeug der Küchenmaschine bildet zum einen bei Benutzung des Zusatzgerätes die antriebsseitige, zweite Kupplungshälfte der zweiten Kupplungsanordnung, und zum anderen kann es selbst ohne Benutzung des Zusatzgerätes zum Zerkleinern und Mischen von weniger festen Nahrungsmitteln als Werkzeug des Handmixers verwendet werden.

In einer Weiterbildung der Erfindung wird vorgeschlagen, daß der Deckel eine Öffnung aufweist, daß die Öffnung durch einen das Getriebe aufnehmenden Gehäuseabschnitt verschlossen ist, daß die erste Kupplungsanordnung im Behälter unterhalb des Deckels und des Gehäuseabschnitts angeordnet ist und daß das Getriebe und die zweite Kupplungshälfte oberhalb des Deckels im Gehäuseabschnitt ausgebildet und von außen zugänglich sind. Durch diese Anordnung liegt das Getriebe völlig außerhalb des Behälters, so daß Verschmutzungen durch Nahrungsmittel vermieden werden. Der Gehäuseabschnitt dient auch zur besseren Handhabung des Zusatzgerätes.

Damit auch beim Reinigen des Deckels kein Wasser in das Getriebe eindringt, ist gemäß einer zweckmäßigen Ausgestaltung der Erfindung vorgesehen, daß die im Getriebe mit der ersten bzw. zweiten Kupplungsanordnung verbundenen Abtriebs- bzw. Antriebswellen in dem Gehäuseabschnitt dichtend gelagert sind.

Ein besonders einfacher Einkupplungsvorgang des Werkzeugs der Küchenmaschine mit der zweiten Kupplungshälfte wird dadurch erreicht, daß sie aus einer Scheibe besteht, daß die Scheibe eine zur drehfesten Aufnahme des Werkzeugs der Küchenmaschine dienende Vertiefung mit einer Mitnehmerflächenanordnung aufweist und daß an der Mitnehmerflächenanordnung zur Einfädelung des Werkzeugs in die Vertiefung eine Kupplungseinführungseinrichtung ausgebildet ist. Hierdurch wird erreicht, daß das Stabmixerwerkzeug beim Aufsetzen des Stabmixers auf das Zusatzgerät automatisch in die an der zweiten Kupplungshälfte ausgebildete Vertiefung eingeführt wird, ohne daß hierbei diesen Vorgang eine Bedienungsperson steuern muß. Dabei ist es vorteilhaft, daß die Kupplungseinführungseinrichtung aus sich von der Scheibe erhebenden Wandelementen besteht, deren von der Scheibe abgewandten Stirnflächen in Drehrichtung des Werkzeugs der Küchenmaschine auf die Vertiefung zulaufende Rampen aufweisen. Die Steigung der Rampen ist dabei so groß, daß, wie es bei einem nichtselbsthemmenden Gewinde der Fall ist, sich die zweite Kupplungsscheibe so lange dreht, bis das Stabmixerwerkzeug in der Vertiefung einrastet. Sollte das Stabmixerwerkzeug leichter zu drehen sein als die zweite Kupplungsscheibe, so dreht sich anstelle der Kupplungsscheibe das Stabmixerwerkzeug.

Damit beim Aufsetzen des Stabmixers eine möglichst gleichmäßige Kraftverteilung sowohl auf die Scheibe als auch auf das Werkzeug ausgeübt wird, ohne daß dabei diese Teile gegeneinander verhaken, und gleichzeitig das Werkzeug in der Vertiefung bei geringem Kraftaufwand zentriert wird, ist in einer Weiterbildung der Erfindung vorgesehen, daß die Mitnehmerflächenanordnung aus zwei diametral gegenüberliegenden, gekrümmten Seitenflächen gebildet wird, deren Krümmung vom Rand der Vertiefung in Drehrichtung radial nach innen zunimmt und daß sich an die Seitenflächen die Wandelemente stufenlos anschließen.

Damit eine schnelle Befestigung und Sicherung des Deckels auf dem Behälter gewährleistet wird, ist in einer Weiterbildung der Erfindung vorgesehen, daß die Sicherung des Deckels auf dem Behälter durch eine Gewindeverbindung hergestellt ist und daß der Deckel in seiner montierten Stellung einen Anschlag mit dem Gehäuse bildet. Die beim Aufsetzen des Stabmixers auf die zweite Kupplungshälfte erzeugte Anpreßkraft wird hierdurch schadlos über den Deckel auf den Behälter übertragen. Hierbei ist es vorteilhaft, daß die Gewindeverbindung aus einem nichtselbsthemmenden Mehrganggewinde besteht und daß die Gewindegänge nur über einen Bruchteil eines Gewindeganges verlaufen, wobei die Gewindegänge gleichmäßig am Umfang des Deckels bzw. des Behälters verteilt sind. Hierdurch wird in vorteilhafter Weise erreicht, daß die Gewindeverschraubung bereits bei einer geringen Drehung des Deckels problemlos und ohne langes Suchen in Eingriff bringbar ist.

Damit beim Öffnen des Behälters das Werkzeug des Zusatzgerätes von der Kupplung getrennt wird, ist in einer weiteren Ausgestaltung der Erfindung vorgesehen, daß die erste Kupplungsanordnung aus einer von der getriebeseitigen Abtriebswelle antreibbaren Platte besteht, die an ihrer dem Werkzeug des Zusatzgerätes zugewandten Unterseite mindestens einen hervorspringenden, zapfenförmigen Vorsprung aufweist, der in eine am Werkzeug des Zusatzgerätes vorhandene Ausnehmung eingreift. Die hierdurch gebildete Kupplungsanordnung ist einfach im Aufbau und ohne großen technischen Aufwand leicht herstellbar. Damit die Kupplungsanordnung stets funktionstüchtig ist und nicht durch Nahrungsmittel verstopft wird, ist vorgesehen, daß die Ausnehmung im Boden einer zur Platte hin offenen Hülse ausgebildet ist und daß die zylindrische Mantelfläche der Hülse die Platte von außen begrenzt.

Damit auch die erste Kupplungsanordnung beim Aufsetzen des Deckels auf den Behälter selbsttätig einrastet, wird gemäß einer Ausführungsart der Erfindung vorgeschlagen, daß der Boden vorzugsweise von drei gleichmäßig am Umfang verteilten Ausnehmungen durchdrungen wird, in die vorzugsweise drei Vorsprünge eingreifen, und daß jeweils von der einen zur anderen Ausnehmung auf diesem Durchmesser liegende Ringabschnitte ausgebildet sind, die als schiefe Ebenen zum Einführen der Vorsprünge in die Ausnehmungen dienen.

Es ist vorteilhaft, daß der Gehäuseabschnitt im wesentlichen zylindrisch ausgebildet ist und daß dieser die zweite Kupplungshälfte überragt. Hierdurch wird zum einen das Aufsetzen und Zentrieren des Handmixers auf dem Zusatzgerät erleichtert, und zum anderen wird die Handlichkeit des Zusatzgerätes im Betrieb als auch während der Montage verbessert.

Ein Ausführungsbeispiel der Erfindung ist in der Zeichnung dargestellt und wird im folgenden näher beschrieben.

Es zeigen:

Fig. 1 Längsschnitt durch das Zusatzgerät nach der Erfindung,
Fig. 2 Draufsicht auf das Zusatzgerät in Pfeilrichtung X nach Fig. 1 und
Fig. 3 Schnitt durch die Hülse entsprechend der Schnittführung III-III nach Fig. 1.

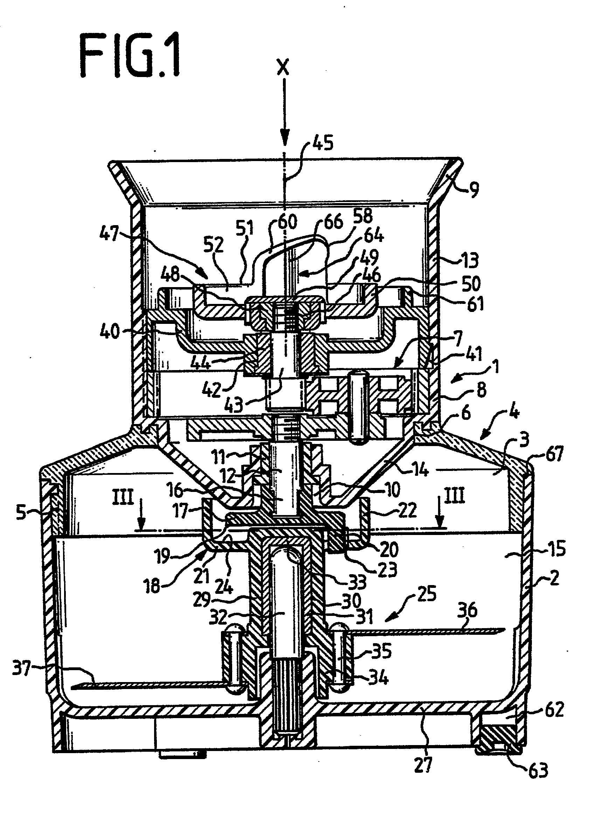

In Fig. 1 besteht das Zusatzgerät 1 aus einem zylindrischen Behälter 2, dessen Öffnung 3 von einem Deckel 4 verschließbar ist. Der Deckel 4 steht über ein nichtselbsthemmendes Mehrganggewinde 5, deren drei Gewindegänge am Umfang des Behälters 2 und des Deckels 4 um 120° versetzt angeordnet sind, mit dem Behälter 2 in drehfestem Eingriff. Der Behälter 4 bildet mit dem Deckel 2 einen Anschlag 67. Der aus durchsichtigem Kunststoff hergestellte Deckel 4 verläuft, vom Behälter 2 ausgehend, in der Zeichnung nach oben kegelig und weist eine zentrale Öffnung 6 auf, in die ein ein Planetengetriebe 7 aufnehmender Gehäuseabschnitt 8 dichtend, beispielsweise durch Kleben, eingesetzt ist. Oberhalb der Öffnung 6 verläuft der Gehäuseabschnitt 8 im wesentlichen als zylindrischer Abschnitt 13 und erweitert sich an seinem freien Ende 9 kegelförmig. Unterhalb der Öffnung 6 verläuft der Gehäuseabschnitt 8 nach unten als trichterförmiger Abschnitt 14 und endet im unteren Bereich in einer zentralen Bohrung 10, in der ein Gleitlager 11 befestigt ist. Das Gleitlager 11 dient zur Führung und Dichtung der vom Planetengetriebe 7 nach unten austretenden Abtriebswelle 12, an deren in das Behälterinnere 15 hineinragenden, freien Endes 16 die als Platte 17 ausgebildete obere Kupplungshälfte der ersten Kupplungsanordnung 18 formschlüssig und drehfest befestigt ist.

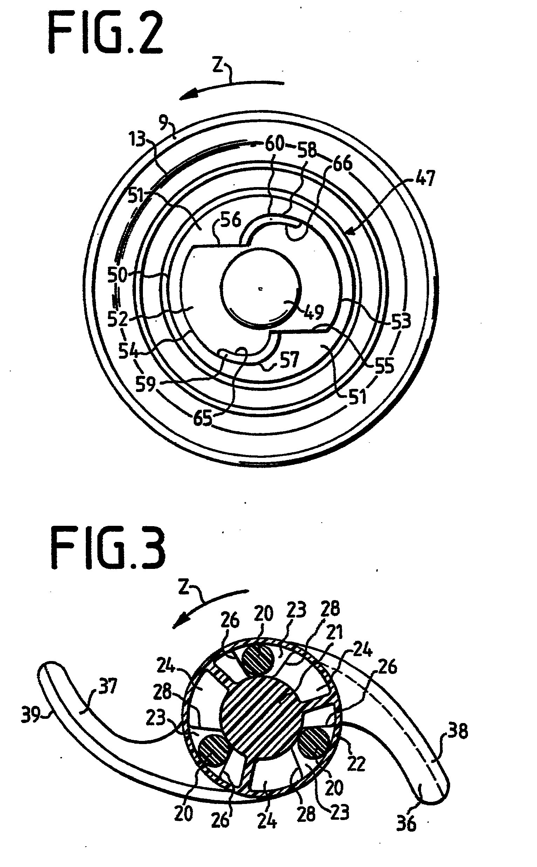

In den Fig. 1 und 3 stehen an der Unterseite 19 der Platte 17 zapfenförmige Vorsprünge 20 hervor, die im Winkel von 120° zueinander angeordnet sind und die auf gleichem Durchmesser verlaufen. Die zapfenförmigen Vorsprünge 20 ragen in der montierten Stellung des Zusatzgerätes 1 in am Boden 21 der Hülse 22 angeordnete Ausnehmungen 23 hinein. Die in Umfangsrichtung zwischen den Vorsprüngen 20 im Boden 21 ausgebildeten Ringabschnitte 24 werden von schiefen Ebenen gebildet, die in Drehrichtung Z des Werkzeugs 25 von oben nach unten laufen. Die schiefen Ebenen 24 haben also ihren höchsten Punkt an der Stelle 26 und ihren tiefsten Punkt an der Stelle 28. Die tiefsten Stellen 28 ist dem Boden 27 näher als die oberen Stellen 26.

An die Hülse 22 schließt sich in Fig. 1 nach unten ein rohrförmiger Abschnitt 29 an, in dem in einer Sacklochbohrung 30 eine Gleitlagerhülse 31 befestigt ist. Ein im Boden 27 des Behälters 2 befestigter Lagerzapfen 32 ragt in die Gleitlagerhülse 31 hinein und liegt mit seinem freien Ende am Boden 33 der Gleitlagerhülse 31 an. An den rohrförmigen Abschnitt 29 schließt sich in Fig. 1 nach unten ein Ringbund 34 an, an dem über Nieten 35 diametral gegenüberliegende, sichelförmige Messer 36, 37 formschlüssig befestigt sind. In Fig. 3 liegen die Schneidkanten 38, 39 in Drehrichtung Z gesehen am hinteren Rand der Messer 36, 37. Die Hülse 22, der rohrförmige Abschnitt 29, die Gleitlagerhülse 31, der Ringbund 34, die Nieten 35 und die Messer 36, 37 bilden das Werkzeug 25 des Zusatzgerätes 1.

An den trichterförmigen Abschnitt 14 schließt sich in Fig. 1 nach oben das Planetengetriebe 7 an, auf das hier nicht näher eingegangen wird, da es bereits seit langem aus dem Stand der Technik bekannt ist. Das Planetengetriebe 7 ist in diesem Ausführungsbeispiel als Untersetzungsgetriebe ausgebildet und ist in der Zeichnung von oben durch einen Gehäusedeckel 40 verschlossen, der in dem zylindrischen Abschnitt 13, beispielsweise durch eine Schnappverbindung 41, formschlüssig und dichtend befestigt ist. Der Gehäusedeckel 40 weist eine zentrale Bohrung 42 auf, in der zur Lagerung der Antriebswelle 43 ein Gleitlager 44 befestigt ist. Die Antriebswelle 43, die Abtriebswelle 12, das Werkzeug 25 und der Lagerzapfen 32 liegen auf einer gemeinsamen Mittellinie 45.

Die Antriebswelle 43 durchdringt den Gehäusedeckel 40 in der Zeichnung nach oben. Oberhalb des Gehäusedeckels 40 ist an dem freien Ende der Antriebswelle 43 ein Gewinde 46 ausgebildet, auf das zur Befestigung der zweiten Kupplungshälfte 47 auf der Antriebswelle 43 eine Mutter 48 aufgeschraubt ist. Damit das Gewinde 46 und die Mutter 48 frei von Korrosion bleiben, ist in der Zeichnung von oben auf die zweite Kupplungshälfte 47 eine Kappe 49 aufgesteckt.

Die zweite Kupplungshälfte 47 besteht im wesentlichen aus einer Scheibe, an deren Rand ein Ringbund 50 hochgezogen ist. Die Stirnfläche 51 des Ringbundes 50 verläuft entsprechend der in Fig. 2 gezeigten Draufsicht. Radial innerhalb des Ringbundes 50 wird eine Vertiefung 52 gebildet, in die das in der Zeichnung nicht dargestellte Werkzeug des Stabmixers eingreift.

Wie in Fig. 2 dargestellt, wird die Vertiefung 52 von im wesentlichen diametral gegenüberliegenden, kreisförmigen Segmenten 53, 54 gebildet, die von Seitenflächen 55, 56 begrenzt sind. Die Seitenflächen 55, 56 bilden die Mitnehmerflächenanordnung für das vom Handmixer angetriebene Werkzeug. Diametral gegenüberliegend erheben sich von der Stirnfläche 51 sichelförmig ausgebildete Wandelemente 57, 58, deren Seitenflächen 65, 66 eine gemeinsame Ebene mit den Seitenflächen 55, 56 bilden und die als Kupplungseinführungseinrichtung 64 für das Werkzeug des Handmixers dienen. Die an den freien Enden der Wandlemente 57, 58 angeordneten Stirnflächen 59, 60 sind als Rampen ausgebildet, die in Drehrichtung Z zur zweiten Kupplungshälfte 47 abfallend verlaufen.

Radial außerhalb der zweiten Kupplungshälfte 47 ist am Gehäuse deckel 40 ein sich in der Zeichnung nach oben erstreckender Ringbund 61 ausgebildet, der zur Zentrierung der das Werkzeug des Handmixers schützend umgebenden Haube dient.

Damit sich während des Betriebs das Zusatzgerät 1 nicht mitdreht, sind an der Unterseite des Bodens 27 in hierfür vorgesehenen Befestigungslöcher 62 Gummistopfen 63 befestigt.

Um Wiederholungen zu vermeiden, wurden in den Fig. 1 bis 3 für gleiche Bauteile gleiche Bezugszeichen verwendet.

Die Wirkungsweise des Zusatzgerätes ist folgende.

Bei geöffnetem Behälter 2 wird zunächst das Werkzeug 25 auf den Lagerzapfen 32 aufgesetzt. Nun wird der Deckel 4 mit dem integrierten Gehäuseabschnitt 8, dem Planetengetriebe 7 und der ersten und zweiten Kupplungshälfte 17, 47 auf die Öffnung 3 des Behälters 2 aufgesetzt. Sobald das Mehrganggewinde 5 greift, dreht sich der Deckel 4 mit dem Gehäuseabschnitt 8 von selbst in das Mehrganggewinde 5 ein, bis der Deckel 4 am oberen Rand des Behälters 2 am Anschlag 67 anschlägt. Sollten hierbei die zapfenförmigen Vorsprünge 20 nicht direkt in die Ausnehmungen 23 eingreifen, sondern schlagen sie zunächst an den Stellen 26 der Ringabschnitte 24 an, so dreht sich das sehr leicht drehbare Werkzeug 25 so lange, bis die Vorsprünge 20 durch die Drehbewegung des Deckels 4 hervorgerufene Axialverschiebung in die Ausnehmungen 23 einrasten. Die Drehung des Werkzeuges 25 wird dadurch erreicht, daß die Vorsprünge 20 aufgrund des Gewichtes des Deckels 4 mit einer sich hieraus ergebenden Normalkraft auf die schiefen Ebenen 24 einwirken. Die schiefen Ebenen 24 gleichen hierbei einem nichtselbsthemmenden Gewinde. Das Zusatzgerät 1 ist betriebsbereit.

Nun kann der nicht dargestellte Handmixer auf die zweite Kupplungshälfte 47 aufgesetzt werden. Hierbei zentriert sich der Handmixer über die ebenfalls nicht dargestellte Haube zwischen dem Ringbund 61 und der Innenwandung des zylindrischen Abschnitts 13. Sollte das Werkzeug des Handmixers beim Aufsetzen nicht direkt in die Vertiefung 52 der zweiten Kupplungshälfte 47 einrasten, sondern ist das Werkzeug versetzt zur Vertiefung 52 angeordnet, so legt sich das Werkzeug zunächst an den Stirnflächen 59, 60 an. Dadurch, daß die Stirnfläche 59, 60 nichtselbsthemmend wirken, so dreht sich die zweite Kupplungshälfte 47 aufgrund der vom Werkzeug des Handmixers ausgeübten Normalkraft solange, bis das Werkzeug des Handmixers in die Vertiefung 52 einrastet.

Wird nun der Handmixer eingeschaltet, so schlagen die Seitenflächen des Werkzeugs an den Seitenflächen 55, 56 der zweiten Kupplungshälfte 47 an und setzen anschließend die zweite Kupplungshälfte 47 in Rotation. Die Drehbewegung wird über die Antriebswelle 43 und das Planetengetriebe 7 auf die Abtriebswelle 12 übertragen. Das Planetengetriebe 7 ist dabei so ausgelegt, daß die An- und Abtriebswelle 43, 12 die gleiche Drehrichtung ausführen. Von der Abtriebswelle 12 wird die Drehbewegung über die erste Kupplungsanordnung 18 auf das Werkzeug 25 übertragen. Durch die Drehzahl des Werkzeugs 25 wird das im Behälter 2 befindliche Nahrungsmittel zerkleinert bzw. vermischt.

Nach Beendigung des Verkleinerungs- bzw. Mischvorganges wird der Handmixer erst ausgeschaltet und dann von der zweiten Kupplungshälfte 47 abgehoben. Durch Drehung des Deckels 4 wird dieser vom Behälter 2 entfernt und es kann das bearbeitete Nahrungsmittel aus dem Behälter 2 entfernt werden. Durch den einfachen Aufbau des Zusatzgerätes 1 ist eine besonders einfache Handhabung und Reinigung möglich. Ohne zusätzliche Montagewerkzeuge kann das Werkzeug 25 aus dem Behälter 2 entfernt werden.

**Patentansprüche**

1. Zusatzgerät (1) für eine elektrische Küchenmaschine, insbesondere für einen mit einem Arbeitswerkzeug versehenen Stabmixer, mit einem in einem Behälter (2) von der Küchenmaschine in Drehung versetzbaren Werkzeug (25), das zum Zerkleinern und/oder Mischen von Nahrungsmitteln dient, mit einem das Werkzeug (25) und den Behälter (2) verschließbaren, mit einem Getriebe (7) versehenen Deckel (4), mit einer an der Antriebsseite (43) des Getriebes (7) mit der Küchenmaschine in Eingriff bringbaren, zweiten Kupplungsanordnung (47) und mit einer an der Abtriebsseite (12) des Getriebes (7) mit dem Werkzeug (25) zusammenwirkenden ersten Kupplungsanordnung (18), dadurch gekennzeichnet, daß das Arbeitswerkzeug der Küchenmaschine mit der antriebsseitigen Kupplungshälfte (47) des Zusatzgerätes (1) die zweite Kupplungsanordnung bildet, daß das Werkzeug (25) im Boden (27) des Behälters (2) drehbar gelagert ist und daß beide Kupplungshälften (19, 20 und 22) der ersten Kupplungsanordnung (18) erst dann drehfest miteinander verbunden sind, wenn der Deckel (4) den Behälter (2) verschlossen hat.

2. Zusatzgerät nach Anspruch 1, dadurch gekennzeichnet, daß der Deckel (4) eine Öffnung (6) aufweist, daß die Öffnung (6) durch einen das Getriebe (7) aufnehmenden Gehäuseabschnitt (8) verschlossen ist, daß die erste Kupplungsanordnung (18) im Behälter (2) unterhalb des Deckels (4) und des Gehäuseabschnitts (8) angeordnet ist und daß das Getriebe (7) und die zweite Kupplungshälfte (47) oberhalb des Deckels (4) im Gehäuseabschnitt (8) ausgebildet und von außen zugänglich sind.

3. Zusatzgerät nach Anspruch 2, dadurch gekennzeichnet, daß die im Getriebe (7) mit der ersten bzw. zweiten Kupplungshälfte (17 bzw. 47) verbundene Abtriebs- bzw. Antriebswelle (12 bzw. 43) in dem Gehäuseabschnitt (8) dichtend gelagert sind.

4. Zusatzgerät nach einem der vorhergehenden Ansprüche, dadurch gekennzeichnet, daß die zweite Kupplungshälfte (47) aus einer Scheibe besteht, daß die Scheibe eine zur drehfesten Aufnahme des Werkzeugs der Küchenmaschine dienende Vertiefung (52) mit einer Mitnehmerflächenanordnung (55, 56) aufweist und daß an der Mitnehmerflächenanordnung (55, 56) zur Einfädelung des Werkzeugs in die Vertiefung (52) eine Kupplungseinführungseinrichtung (64) ausgebildet ist.

5. Zusatzgerät nach Anspruch 4, dadurch gekennzeichnet, daß die Kupplungseinführungseinrichtung (64) aus sich von der Scheibe erhebenden Wandelementen (57, 58) besteht, deren von der Scheibe abgewandten Stirnflächen (59, 60) in Drehrichtung (Z) des Werkzeugs der Küchenmaschine auf die Vertiefung (52) zulaufende Rampen aufweisen.

6. Zusatzgerät nach Anspruch 5, dadurch gekennzeichnet, daß die Mitnehmerflächenanordnung (55, 56) aus zwei diametral gegenüberliegenden, gekrümmten Seitenflächen (65, 66) gebildet wird, deren Krümmung vom Rand der Vertiefung (52) in Drehrichtung (Z) radial nach innen zunimmt, und daß sich an die Seitenflächen (65, 66) die Wandelemente (57, 58) stufenlos anschließen.

7. Zusatzgerät nach Anspruch 1, dadurch gekennzeichnet, daß die Sicherung des Deckels (4) auf dem Behälter (2) durch eine Gewindeverbindung (5) hergestellt ist und daß der Deckel (4) in seiner montierten Stellung einen Anschlag (67) mit dem Behälter (2) bildet.

8. Zusatzgerät nach Anspruch 7, dadurch gekennzeichnet, daß die Gewindeverbindung (5) aus einem nicht selbsthemmenden Mehrganggewinde besteht und daß die Gewindegänge nur über einen Bruchteil eines Gewindeganges verlaufen, wobei die Gewindegänge gleichmäßig am Umfang des Deckels (4) bzw. des Behälters (2) verteilt sind.

9. Zusatzgerät nach den Ansprüchen 1 bis 3, dadurch gekennzeichnet, daß die erste Kupplungsanordnung (18) aus einer von der getriebeseitigen Abtriebswelle (12) antreibbaren Platte (17) besteht, die an ihrer dem Werkzeug (25) des Zusatzgerätes (1) zugewandten Unterseite (19) mindestens einen hervorspringenden, zapfenförmigen Vorsprung (20) aufweist, der in eine am Werkzeug (25) des Zusatzgerätes (1) vorhandenen Ausnehmung (23) eingreift.

10. Zusatzgerät nach Anspruch 9, dadurch gekennzeichnet, daß die Ausnehmung (23) im Boden (21) einer zur Platte (17) hin offenen Hülse (22) ausgebildet ist und daß die zylindrische Mantelfläche der Hülse (22) die Platte (17) von außen begrenzt.

11. Zusatzgerät nach den Ansprüchen 9 und/oder 10, dadurch gekennzeichnet, daß der Boden (21) vorzugsweise von drei gleichmäßig am Umfang verteilten Ausnehmungen (23) durchdrungen wird, in die vorzugsweise drei Vorsprünge (23) eingreifen, und daß jeweils von der einen zur anderen Ausnehmung (23) auf diesem Durchmesser liegende Ringabschnitte (24) ausgebildet sind, die als schiefe Ebenen zum Einführen der Vorsprünge (20) in die Ausnehmungen (23) dienen.

12. Zusatzgerät nach Anspruch 2, dadurch gekennzeichnet, daß der Gehäuseabschnitt (8) im wesentlichen zylindrisch ausgebildet ist und daß dieser die zweite Kupplungshälfte (47) überragt.

**Claims**

1. An attachment (1) for an electric food processor, in particular for a hand blender provided with a processing tool, with a tool (25) which is rotatable by the food processor inside a container (2) and serves to chop and/or blend food materials, with a lid (4) which is adapted to close the tool (25) and the container (2) and is provided with a gearing (7), with a second coupling structure (47) engageable with the food processor at the input end (43) of the gearing (7), and with a first coupling structure (18) cooperating with the tool (25) at the output end (12) of the gearing (7), characterized in that the processing tool of the food processor, in cooperation with the coupling half (47) of the attachment (1) on the side proximate the input end, forms the second coupling structure, that the tool (25) is rotatably carried in the bottom (27) of the container (2), and that the two coupling halves (19, 20 and 22) of the first coupling structure (18) are not connected with each other in a non-rotating relationship until after the lid (4) has closed the container (2).

2. The attachment as claimed in claim 1, characterized in that the lid (4) includes an opening (6), that the opening (6) is closed by a housing portion (8) receiving the gearing (7), that the first coupling structure (18) is arranged in the container (2) below the lid (4) and the housing portion (8), and that the gearing (7) and the second coupling half (47) are provided above the lid (4) in the housing portion (8) and accessible from the outside.

3. The attachment as claimed in claim 2, characterized in that the output and input shaft (12 and 43, respectively) connected in the gearing (7) with the fist and second coupling half (17 and 47, respectively) are carried in the housing portion (8) in a sealed relationship thereto.

4. The attachment as claimed in any one of the preceding claims, characterized in that the second coupling half (47) is comprised of a disk, that the disk includes a recess (52) which serves to receive the tool of the food processor in a non-rotating relationship thereto and is provided with an arrangement of tool-engaging surfaces (55, 56), and that a coupling insertion structure (64) is provided on the arrangement of tool-engaging surfaces (55, 56) for inserting the tool into the recess (52).

5. The attachment as claimed in claim 4, characterized in that the coupling insertion structure (64) is comprised of wall elements (57, 58) projecting from the disk, their ends (59, 60) remote from the disk including ramps which extend towards the recess (52) in the direction of rotation (Z) of the food processor tool.

6. The attachment as claimed in claim 5, characterized in that the arrangement of tool-engaging surfaces (55, 56) is formed of two diametrically opposed curved lateral surfaces (65, 66) whose curvature increases from the edge of the recess (52) radially inwardly in the direction of rotation (Z), and that the wall elements (57, 58) smoothly merge with the respective lateral surfaces (65, 66).

7. The attachment as claimed in claim 1, characterized in that the lid (4) is secured on the container (2) by means of a thread-type fastening structure (5), and that in the mounted position the lid (4) provides a stop means (67) for the container (2).

8. The attachment as claimed in claim 7, characterized in that the thread-type fastening structure (5) is a non-selflocking multiple thread structure, and that the threads are formed of thread elements which are spaced evenly around the periphery of the lid (4) and the container (2), respectively.

9. The attachment as claimed in claims 1 to 3, characterized in that the first coupling structure (18) is comprised of a plate (17) which is adapted to be driven by the output shaft (12) at the output end of the gearing and includes on its underside (19) proximate the tool (25) of the attachment (1) at least one protruding pin-shaped projection (20) which engages into a recess (23) provided on the tool (25) of the attachment (1).

10. The attachment as claimed in claim 9, characterized in that the recess (23) is formed in the bottom (21) of a sleeve (22) which is open towards the plate (17), and that the cylindrical peripheral surface of the sleeve (22) bounds the plate (17) from the outside.

11. The attachment as claimed in claims 9 and/or 10, characterized in that preferably three recesses (23) spaced evenly around the periphery extend through the bottom (21) for engagement by preferably three projections (20), and that annular sections (24) are formed on this diameter intermediate the respective recesses (23) to serve as inclined planes for introducing the projections (20) into the recesses (23).

12. The attachment as claimed in claim 2, characterized in that the housing portion (8) is of substantially cylindrical configuration and extends beyond the second coupling half (47).

**Revendications**

1. Appareil-accessoire (1) pour un appareil électroménager de cuisine, notamment pour un mixer en forme générale de tige muni d'un outil de travail, comportant un outil (25) que l'appareil électroménager de cuisine peut mettre en rotation dans un récipient (2) et qui sert à broyer et/ou à mélanger des aliments, un couvercle (4) pour enclore l'outil (25) et le récipient (2), ce couvercle étant muni d'un engrenage de transmission (7), un deuxième agencement d'accouplement (47) qui, du côté entrée d'entraînement (43) de l'engrenage (7), peut être mis en prise avec l'appareil de cuisine, et un premier agencement d'accouplement (18) qui, du côté sortie de mouvement (12) de l'engrenage (7), coopère avec l'outil (25), caractérisé par le fait que l'outil de travail de l'appareil de cuisine forme, avec la moitié d'accouplement (47) de l'appareil-accessoire (1) située côté entraînement, le deuxième agencement d'accouplement, par le fait que l'outil (25) est monté à rotation dans le fond (27) du récipient (2), et par le fait que les deux moitiés d'accouplement (19, 20 et 22) du premier agencement d'accouplement (18) ne sont mutuellement solidarisées en rotation que si le couvercle (4) a fermé le récipient (2).

2. Appareil-accessoire selon revendication 1, caractérisé par le fait que le couvercle (4) présente une ouverture (6), par le fait que l'ouverture (6) est fermée par une partie carter (8) recevant l'engrenage (7), par le fait que le premier agencement d'accouplement (18) est agencé dans le récipient (2), en dessous du couvercle (4) et de la partie-carter (8), et par le fait que l'engrenage (7) et la deuxième moitié d'accouplement (47) sont aménagés au-dessus de couvercle (4), dans la partie-carter (8), et sont accessibles de l'extérieur.

3. Appareil-accessoire selon revendication 2, caractérisé par le fait que l'arbre de sortie et l'arbre d'entrée (respectivement 12, 43) respectivement liés à la première et à la deuxième moitié d'accouplement (respectivement 17, 47) dans l'engrenage (7), sont montés avec étanchéité dans la partie-carter (8).

4. Appareil-accessoire selon l'une des revendications précédentes, caractérisé par le fait que la deuxième moitié d'accouplement (47) est constituée par un disque, par le fait que le disque présente, pour servir à recevoir l'outil de l'appareil de cuisine, avec solidarisation en rotation, une dépression (52) avec un agencement de surfaces d'entraînement (55, 56) et par le fait qu'un dispositif d'introduction pour accouplement (64) est aménagé sur l'agencement de surfaces d'entraînement (55, 56), pour l'introduction de l'outil dans la dépression (52).

5. Appareil-accessoire selon revendication 4, caractérisé par le fait que le dispositif d'introduction d'accouplement (64) est constitué par des éléments de paroi (57, 58) s'élevant depuis le disque, dont les surfaces frontales (59, 60) éloignées du disque présentent des rampes qui, dans le sens de rotation (Z) de l'outil de l'appareil de cuisine, arrivent sur la dépression (52).

6. Appareil-accessoire selon revendication 5, caractérisé par le fait que l'agencement de surfaces d'entraînement (55, 56) est constitué par deux surfaces latérales courbes (65, 66), diamétralement opposées, dont la courbure, depuis le bord de la dépression (52) est croissante radialement vers l'intérieur, dans le sens de rotation (Z), et par le fait que les éléments de paroi (57, 58) se raccordent sans discontinuité aux surfaces latérales (65, 66).

7. Appareil-accessoire selon revendication 1, caractérisé par le fait que l'immobilisation du couvercle (4) sur le récipient (2) est réalisée par une liaison par filetage (5), et par le fait que, dans sa position montée, le couvercle (4) forme une butée (67) avec le récipient (2).

8. Appareil-accessoire selon revendication 7, caractérisé par le fait que la liaison par filetage (5) est constituée par un filetage non autobloquant, à plusieurs filets, et par le fait que les filets ne s'étendent que sur une fraction d'un pas de filet, les filets étant uniformément répartis sur les périphéries respectives du couvercle (4) et du récipient (2).

9. Appareil-accessoire selon les revendications 1 à 3, caractérisé par le fait que le premier agencement d'accouplement (18) est constitué par une plaque (17) pouvant être entraînée par l'arbre de sortie (12) côté engrenage, laquelle présente, en son côté dessous (19) tourné vers l'outil (25) de l'appareil-accessoire (1), au moins un saillant en forme de téton (20) qui s'engage dans un évidement (23) aménagé sur l'outil (25) de l'appareil-accessoire (1).

10. Appareil-accessoire selon revendication 9, caractérisé par le fait que l'évidement (23) est aménagé dans le fond (21) d'un manchon (22) ouvert en direction de la plaque (17), et par le fait que la surface périphérique cylindrique du manchon (22) borde extérieurement la plaque (17).

11. Appareil-accessoire selon les revendications 9 et/ou 10, caractérisé par le fait que le fond (21) est traversé de préférence par trois évidements (23) régulièrement répartis sur le pourtour, dans lesquels s'engagent de préférence trois saillants (20), et par le fait qu'il y a, à chaque fois d'un évidement à un autre évidement (23), des portions annulaires (24) situées sur ce diamètre, lesquelles servent de plans inclinés pour l'introduction des saillants (20) dans les évidements (23).

12. Appareil-accessoire selon revendication 2, caractérisé par le fait que la partie-carter (8) est de configuration sensiblement cylindrique et par le fait qu'elle déborde au-delà de la deuxième moitié d'accouplement (47).

# FIG.1

# FIG.2

# FIG.3